(19) Europäisches Patentamt
European Patent Office
Office européen des brevets

(11) Veröffentlichungsnummer: **0 175 335 B1**

(12) # EUROPÄISCHE PATENTSCHRIFT

(45) Veröffentlichungstag der Patentschrift: **01.03.89**

(51) Int. Cl.⁴: **C 08 F 26/10**

(21) Anmeldenummer: **85111719.2**

(22) Anmeldetag: **17.09.85**

(54) **Verfahren zur Herstellung von unlöslichen, nur wenig quellbaren pulverförmigen Polymeren.**

(30) Priorität: **18.09.84 DE 3434137**

(43) Veröffentlichungstag der Anmeldung:
**26.03.86 Patentblatt 86/13**

(45) Bekanntmachung des Hinweises auf die Patenterteilung:
**01.03.89 Patentblatt 89/9**

(84) Benannte Vertragsstaaten:
**CH DE FR GB IT LI NL**

(56) Entgegenhaltungen:
**EP-A- 0 027 936**
**EP-A- 0 088 964**

**Horben-Weyl, Band 14, Makromolekulare Stoffe, Teil 1, Seite 98 (1961)**
**Ullmanns Enzyklopädie der Technischen Chemie, 4. Aufl. Bd. 19 (1980), Seite 385**

(73) Patentinhaber: **BASF Aktiengesellschaft, Carl-Bosch-Strasse 38, D-6700 Ludwigshafen (DE)**

(72) Erfinder: **Tschang, Chung-Ji, Dr., Hinterbergstrasse 31, D-6702 Bad Duerkheim (DE)**
Erfinder: **Messmer, Karlheinz, Dr., Auf Kies 6, D-6719 Weisenheim (DE)**
Erfinder: **Denzinger, Walter, Wormser Landstrasse 65, D-6720 Speyer (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Aus der DE-PS 2 255 263 ist ein Verfahren zur Herstellung von unlöslichen, vernetzten, nur wenig quellbaren Polymerisaten des N-Vinylpyrrolidons bekannt, bei dem man N-Vinylpyrrolidon in wässriger Lösung in Gegenwart von 0,5 bis 10 Gew.%, bezogen auf N-Vinylpyrrolidon, eines cyclischen Säureamids, das mindestens zwei ethylenisch ungesättigte Gruppen enthält und von denen mindestens eine am Amidstickstoff gebunden ist, als Vernetzer polymerisiert. Die Polymerisationsreaktion wird dabei durch Erhitzen der Reaktionslösung auf mindestens 80°C gestartet und bei der Siedetemperatur des Wassers zu Ende geführt.

Die US-PS 3 277 066 betrifft ein Verfahren zur Herstellung von unlöslichen Polymerisaten von N-Vinyllactamen durch Erhitzen von N-Vinyllactamen in Gegenwart von Oxiden und Hydroxiden von Alkalimetallen oder Erdalkalimetallen als Katalysator und Wasser. Die Polymerisation wird bei höherer Temperatur gestartet, z.B. bei 140°C, und anschliessend bei einer tieferen Temperatur (100°C) fortgeführt.

Gemäss der Lehre der DE-PS 2 437 640 wird N-Vinylpyrrolidon in verdünnter wässriger Lösung in Gegenwart der gleichen Vernetzer unter Ausschluss von Sauerstoff und zusätzlich in Gegenwart von 0,05 bis 2 Gew.%, bezogen auf N-Vinylpyrrolidon, mindestens einer α- oder β-Ketocarbonsäure oder deren Methyl- oder Ethylester polymerisiert. Bei den bekannten Verfahren ist es erforderlich, zumindest geringe Mengen an Basen mitzuverwenden. Es muss jedoch darauf geachtet werden, dass nicht in einem zu hohen pH-Bereich polymerisiert wird, weil sonst eine Vergilbung der Polymerisate eintritt.

Aus der US-PS 4 451 582 ist ein Verfahren zur Herstellung von unlöslichen, in Wasser nur wenig quellbaren, körnigen Polymerisaten aus basischen Vinylheterocyclen mit einem pKa-Wert von mehr als 4 und deren Copolymerisaten mit bis zu 30 Gew.% copolymerisierbarer Monomerer bekannt, bei dem man die Monomeren in Gegenwart von 0,1 bis 10 Gew.%, bezogen auf die Gesamtmonomermenge, eines Vernetzers unter Ausschluss von Sauerstoff und Polymerisationsinitiatoren polymerisiert. Die Polymerisate werden vorzugsweise durch Fällungspolymerisation in Wasser hergestellt. Sie können jedoch auch in Abwesenheit von Lösemitteln für die Monomeren durch Erhitzen der Monomeren auf Temperaturen von vorzugsweise 150 bis 180°C erhalten werden. Diese Reaktion ist allerdings schlecht kontrollierbar und ergibt nur geringe Raum-Zeit-Ausbeuten und relativ stark verunreinigte Produkte.

Aus Houben-Weyl, Band 14, Makrom. Stoffe Teile 1, Seite 98 (1961) ist bekannt, dass aus Gemischen von Styrol mit Divinylbenzol Popkorn-Polymere gebildet werden. Derartige Polymerisate entstehen auch bei der technischen Butadien-Styrol-Polymerisation. Auch Acrylsäuremethylester neigt zur Bildung von Popkorn-Polymeren. Popkorn-Polymere haben die Eigenschaft, dass sie bei Kontakt mit den Monomeren, aus denen sie bestehen oder mit anderen Monomeren, diese in Popkornpolymerisate verwandeln können. Sie wirken sozusagen als Keim für die Polymerisation. Die Aktivität geht jedoch verloren, wenn sie mit Luft in Berührung kommen.

Aus Ullmanns Encyklopädie der Techn. Chemie, 4. Aufl. Band 19, 1980, Seite 385, ist bekannt, dass beim Erhitzen von N-Vinylpyrrolidon mit Hydroxiden und Alkoholaten der Alkali- und Erdalkali-Metalle in spontaner Reaktion ein unlösliches, in Wasser schwach quellbares Polymerisat gebildet wird. Solche als Popkorn-Polymerisate bezeichneten Stoffe entstehen auch beim Erhitzen von N-Vinylpyrrolidon mit Divinyl-Verbindungen unter Ausschluss von Sauerstoff. In Abwesenheit von Basen dauert es in der Regel mehrere Stunden, bevor die Popkorn-Polymerisation überhaupt beginnt.

Die DE-OS 2 636 243 betrifft ein Verfahren zur Herstellung von pulverförmigen Polymerisaten, bei dem man wasserlösliche ethylenisch ungesättigte Verbindungen, die hydrophile Polymerisate bilden, in Gegenwart von Wasser als Wärmeübertragungsmittel in einem Pulverbett unter Aufrechterhaltung des Pulverzustands, Umwälzung der Reaktionsmasse und Verdampfen des Wassers aus der Polymerisationszone in Gegenwart von Polymerisationsinitiatoren zu wasserlöslichen bzw. wasserquellbaren Polymerisaten polymerisiert.

Aus der EP-Anmeldung 27 936 ist ein Verfahren zur Herstellung von pulverförmigen Polymerisaten aus polymerisierbaren monoethylenisch ungesättigten Verbindungen bekannt, bei dem man die Monomeren in einem Pulverbett in Gegenwart üblicher Polymerisationsinitiatoren unter Aufrechterhaltung des Pulverzustands und Umwälzung der Reaktionsmasse polymerisiert. Um die Polymerisationswärme abzuführen, verwendet man als Wärmeübertragungsmittel organische Lösemittel, die ein Fällungsmittel für die Polymerisate darstellen. Die organischen Lösemittel werden dampfförmig aus der Polymerisationszone entfernt. Man erhält wasserlösliche bzw. in Wasser quellbare Polymerisate.

Der vorliegenden Erfindung liegt die Aufgabe zugrunde, ein Verfahren zur Herstellung von unlöslichen, nur wenig quellbaren, pulverförmigen Polymerisaten des N-Vinylpyrrolidons zur Verfügung zu stellen, bei dem direkt pulverförmige Polymerisate in hoher Reinheit erhalten werden und bei dem die Raum-Zeit-Ausbeute höher ist als bei den bekannten Verfahren zur Herstellung von unlöslichen Polymerisaten.

Die Aufgabe wird erfindungsgemäss gelöst mit einem Verfahren zur Herstellung von unlöslichen, nur wenig quellbaren, pulverförmigen Polymerisaten auf Basis von N-Vinylpyrrolidon durch Polymerisieren von

(a) N-Vinylpyrrolidon oder Mischungen aus mindestens 0,5 Gew.% N-Vinylpyrrolidon mit Acrylamid, Methacrylamid, Acrylsäureester, Methacrylsäureester, acyclischen N-Vinylcarbonsäureamiden, einem Vinylester und/oder einer Verbindung der Formel

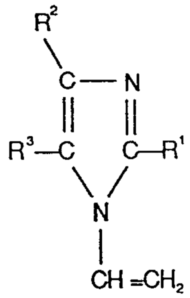

(I).

in der $R^1$, $R^2$, $R^3$ = H, $CH_3$; und $R^1$ ausserdem $C_2H_5$, $C_3H_7$ und $C_4H_9$ ist, und

(b) 0,1 bis 10 Gew.%, bezogen auf die gesamten Monomeren, einer mindestens zwei ethylenisch ungesättigte nicht konjugierte Doppelbindungen aufweisenden Verbindung als Vernetzer unter Ausschluss von Sauerstoff und Polymerisationsinitiatoren, wenn man zum Starten der Polymerisation zunächst ein unlösliches, nur wenig quellbares, pulverförmiges Polymerisat des N-Vinylpyrrolidons durch Erhitzen von Mischungen aus 99,6 bis 98,8 Gew.% N-Vinylpyrrolidon und 0,4 bis 1,2 Gew.% einer mindestens zwei ethylenisch ungesättigte nicht konjugierte Doppelbindungen aufweisenden Verbindung auf eine Temperatur in dem Bereich von 100 bis 150 °C in Abwesenheit von Sauerstoff und Polymerisationsinitiatoren herstellt und die Polymerisation in einem Pulverbett, das ein unlösliches, nur wenig quellbares Polymerisat enthält oder daraus besteht, in Gegenwart eines Wärmeübertragungsmittels, das gegenüber den Reaktionsteilnehmern inert ist, bei Temperaturen von 90 bis 220 °C unter Aufrechterhaltung des Pulverzustandes, Umwälzung der Reaktionsmasse und Verdampfen des Wärmeübertragungsmittels aus der Polymerisationszone durchführt.

Im Gegensatz zu der sonst üblichen Herstellung von unlöslichen, nur wenig quellbaren, pulverförmigen Polymerisaten, den sogenannten Popkorn-Polymerisaten, erfolgt die Herstellung dieser Polymeren gemäss vorliegender Erfindung in einem Pulverbett. Der Pulverzustand des Reaktionsgemisches wird dabei während der gesamten Polymerisation aufrechterhalten. Die sonst übliche Induktionsperiode kann bei dem erfindungsgemässen Verfahren umgangen werden, wenn man in der Polymerisationszone irgendein unlösliches, nur wenig quellbares Polymerisat (Popkorn-Polymerisat) vorlegt, das unter Ausschluss von Sauerstoff hergestellt, gegebenenfalls gelagert und gehandhabt wurde. Solche Popkorn-Polymerisate weisen genügend aktive Zentren auf, um bei Zufuhr von geeigneten Monomerenmischungen die Polymerisation der Monomeren zu initiieren. Auch Popkorn-Polymerisate, die mit Sauerstoff in Berührung gekommen sind, können zum Starten der Popkorn-Polymerisation verwendet werden, nachdem der Sauerstoff vollständig daraus entfernt worden ist.

Als Monomerkomponente (a) verwendet man vorzugsweise N-Vinylpyrrolidon. Ausserdem kommen Mischungen in Betracht, die mindestens 0,5 Gew.% N-Vinylpyrrolidon und als weiteres Monomer Acrylamid, Methacrylamid, Acrylsäureester, Methacrylsäureester, acyclische N-Vinylcarbonsäureamide und/oder Vinylester enthalten. Von den Estern der Acrylsäure und Methacrylsäure eignen sich vor allem diejenigen, die sich von einwertigen $C_1$- bis $C_4$-Alkoholen oder von gesättigten zweiwertigen $C_2$- bis $C_4$-Alkoholen ableiten. Als acyclische N-Vinylcarbonsäureamide kommen beispielsweise Verbindungen der Formel

$$R\text{-}CO\text{-}NR^1\text{-}CH = CH_2, \qquad II,$$

in der R = H, $C_1$- bis $C_3$-Alkyl und
$R^1$ = H, $CH_3$ ist,

in Betracht. Typische Vertreter dieser Verbindungsklasse sind beispielsweise N-Vinylformamid, N-Vinyl-N-methyl-formamid und N-Vinyl-N-methylacetamid. Von den Verbindungen der Formel I kommen vor allem 1-Vinylimidazol und die mit Methylgruppen substituierten Derivate, wie 1-Vinyl-2-methylimidazol, in Betracht. Von besonderem Interesse sind ausserdem als Monomer (a) Mischungen aus 99 bis 30 Gew.% N-Vinylpyrrolidon und 1 bis 70 Gew.% Vinylpropionat. Geeignete Monomerenmischungen als Komponente (a) enthalten 99 bis 0,5 Gew.% N-Vinylpyrrolidon und 1 bis 99,5 Gew.% mindestens eines Monomeren oder einer Monomerenmischung von Acrylamid, Methacrylamid, N-Vinylformamid, N-Vinyl-N-methylacetamid und/oder Acrylsäureester.

Als Monomer der Komponente (b) verwendet man eine mindestens zwei ethylenisch ungesättigte Doppelbindungen aufweisende Verbindung als Vernetzer. Die Doppelbindungen in den Vernetzern sind nicht konjugiert. Vorzugsweise handelt es sich bei den Vernetzern um Divinylethylenharnstoff, Ethyliden-bis-3-(N-vinylpyrrolidon), 1-Vinyl-3-ethylidenpyrrolidon, Acrylsäureallylester, Methacrylsäureallylester, Divinylpropylenharnstoff, Butandioldiacrylat, Methylen-N,N'-bis-acrylamid, Ethylen-N,N'-bis-acrylamid. Die Vernetzer sind, bezogen auf die gesamten bei der Polymerisation eingesetzten Monomeren, in einer Menge von 0,1 bis 10, vorzugsweise 0,4 bis 2 Gew.% anwesend. Man kann entweder einen einzigen Vernetzer, z.B. Divinylethylenharnstoff oder Acrylsäureallylester bzw. Mischungen mehrerer Vernetzer verwenden, z.B. Mischungen aus Divinylethylenharnstoff und Butandioldiacrylat bzw. Mischungen aus Divinylpropylenharnstoff und Methylen-N,N'-bis-acrylamid.

Die Herstellung des Ausgangsmaterials d.h. der Popkorn-Polymerisate, die zum Starten der Popkorn-Polymerisation vorgelegt werden, kann in einer separaten Apparatur oder auch in der Apparatur vorgenommen werden, in der die Polymerisation anschliessend im Pulverbett durchgeführt wird. Zur Herstellung eines polymerisationsfähigen Popkorn-Polymerisates, das bei Zugabe von geeigneten Monomerenmischungen die Polymerisation startet, geht man von einer Mischung aus 99,6 bis 98,8 Gew.% N-Vinylpyrrolidon-2 und 0,4 bis 1,2 Gew.% einer mindestens 2-ethylenisch ungesättigte Doppelbindungen aufweisenden Verbindung als Vernetzer aus. Hierfür verwendet man vorzugsweise frisch destilliertes N-Vinylpyrrolidon-2, weil N-Vinylpyrrolidon, das längere Zeit gelagert wurde, zu einer längeren Induktionsperiode Anlass gibt. Die Polymerisation kann sowohl mit wasserhaltigem wie auch mit wasserfreiem N-Vinylpyrrolidon gestartet und fortgeführt werden. Es ist jedoch vorteilhaft, für die Initiierung der Polymerisation wasserfreies N-Vinylpyrrolidon zu verwenden, weil die Polymerisation in aller Regel bei Temperaturen oberhalb des Siedepunkts von Wasser gestartet wird. Im allgemeinen werden solche Popkorn-Polymerisate bei einer Temperatur von 100 bis 150 °C in Abwesenheit von Sauerstoff und Polymerisationsinitiatoren hergestellt.

Als Vernetzer für die Herstellung eines aktiven Popkorn-Polymerisates verwendet man vorzugsweise Divinylethylenharnstoff, Ethyliden-bis-3(N-vinylpyrrolidon), 1-Vinyl-3-ethylidenpyrrolidon, Butandioldiacrylat, Methylen-N,N′-bis-acrylamid, Ethylen-N,N′-bis-acrylamid und/oder Divinylpropylenharnstoff. Die für die Herstellung des aktiven Popkorns verwendete Menge an Vernetzer liegt in der bevorzugten Ausführungsform unterhalb der Vernetzermengen, die bisher für die Herstellung von Popcorn-Polymerisaten des N-Vinylpyrrolidons eingesetzt wurden. Man kann jedoch auch grössere Mengen an Vernetzer für die Herstellung des aktiven Popcorn-Polymerisates verwenden, jedoch ist dann mit einer längeren Induktions- und auch Polymerisationszeit zu rechnen. Die Induktionsperiode bei der Herstellung des aktiven Popcorn-Polymerisates beträgt etwa 10 bis 30 Minuten. Die oben beschriebenen Monomerenmischungen werden unter Rühren polymerisiert. Aus der Lösung bildet sich bei Abschluss der Polymerisation ein trockenes Pulver, das unter Ausschluss von Sauerstoff gelagert bzw. direkt als Vorlage für die Polymerisation im Pulverbett eingesetzt werden kann.

Die oben beschriebenen Popcorn-Polymerisate sind in allen Lösungsmitteln unlöslich und darin auch nur wenig quellbar. Sie können zwar bis zur 10fachen Menge ihres Gewichts an Wasser aufnehmen, unterscheiden sich dennoch von als quellbaren bezeichneten Polymerisaten dadurch, dass ihr Wasseraufnahmevermögen bei gleichem Gehalt an Vernetzer nur einen Bruchteil des Wasseraufnahmevermögens der bekannten in Gegenwart von Polymerisationsinitiatoren hergestellten gelförmigen Polymerisate beträgt. Der Teilchendurchmesser der unlöslichen, nur wenig quellbaren Polymerisate beträgt 0,05 bis 5 mm. Zur erfindungsgemässen Herstellung von Popkorn-Polymerisaten legt man in einer Polymerisationszone ein unlösliches, nur wenig quellbares Polymerisat vor oder stellt es darin her und polymerisiert dann die oben beschriebenen Monomerenmischungen aus (a) und (b) in Gegenwart eines Wärmeübertragungsmittels, das gegenüber den Reaktionsteilnehmern inert ist, bei Temperaturen von 90 bis 200 °C unter Aufrechterhaltung des Pulverzustands, Umwälzung der Reaktionsmasse und Verdampfen des Wärmeübertragungsmittels aus der Polymerisationszone unter Ausschluss von Sauerstoff und Polymerisationsinitiatoren. Die Wärmeübertragungsmittel haben den Zweck, die bei der Polymerisation und die durch Umwälzung des Pulvers entstehende Wärme aus dem Reaktionssystem zu entfernen.

Als Wärmeübertragungsmittel kommen beispielsweise folgende bei Raumtemperatur flüssige Substanzen in Betracht: Wasser, Alkohole, Ketone, Ether, aromatische und aliphatische Kohlenwasserstoffe, halogenierte Kohlenwasserstoffe und Ester. Das Wärmeübertragungsmittel wird vorteilhafterweise in einer Menge eingesetzt, die ausreicht, um die unter den Reaktionsbedingungen entstehende Wärme aus der Polymerisationszone abzuführen. Die Menge an Wärmeübertragungsmittel ist somit abhängig von der Verdampfungswärme des jeweils verwendeten Wärmeübertragungsmittels, d.h. die bei der Polymerisation frei werdende Wärme muss etwa so gross sein, wie die Verdampfungsenthalpie des Wärmeübertragungsmittels. So benötigt man beispielsweise bei Verwendung von Wasser als Wärmeübertragungsmittel etwa 5 bis 22%, bezogen auf die bei der Polymerisation eingesetzten Monomeren, während man bei Einsatz von organischen Lösungsmitteln als Wärmeüberträger etwa 15 bis 70% Lösungsmittel, bezogen auf die Monomeren, benötigt. Feste Monomere, wie z.B. Acrylamid, müssen vor der erfindungsgemässen Polymerisation in Lösung gebracht werden. Dabei ist es u.U. nötig, mehr Lösungsmittel, z.B. Wasser, einzusetzen, als mit Hilfe der Polymerisationsenthalpie verdampft werden kann. In diesen Fällen ist es sinnvoll, das überschüssige Lösemittel durch Wärmezufuhr in den Polymerisationsraum zum Verdampfen zu bringen. Einzelne Beispiele für Wärmeübertragungsmittel sind Methanol, Ethanol, Isopropanol, n-Propanol, n-Butanol, Isobutanol, tert.-Butanol, Cyclohexanol, Aceton, Methylethylketon, Diethylketon, Cyclohexanon, Methyl-tert.-butylether, Pentan, Hexan, Cyclohexan, aliphatische $C_7$- bis $C_{10}$-Kohlenwasserstoffe, Toluol, Xylol, Essigsäurepropylester und Essigsäurebutylester.

Vorzugsweise verwendet man als Wärmeübertragungsmittel Wasser, einwertige $C_1$- bis $C_4$-Alkohole, Methylethylketon, Cyclohexanon, n-Propanol, Isopropanol und Essigsäurepropylester. Die Wärmeübertragungsmittel sind bei Normaldruck flüssig und haben einen Siedepunkt in dem Bereich von etwa 40 bis 150 °C.

Die Wärmeübertragungsmittel werden zusammen mit der Monomerenmischung mit dem auf die Polymerisationstemperatur erhitzten pulverförmigen Polymerisat in Kontakt gebracht. Die Monomeren (a) und (b) werden kontinuierlich oder chargenweise in das Pulverbett eingebracht, vorzugsweise in dem Mass, wie sie auch polymerisieren. Es ist besonders bevorzugt, die Monomeren kontinuierlich oder chargenweise in das Pulverbett einzubringen und die entstehenden Polymerisate kontinuierlich oder chargenweise in einer Menge, die dem Gewicht der zugeführten Menge an Monomeren in etwa entspricht, aus der Polymerisationszone auszutragen.

Die Polymerisation der Monomeren (a) und (b) erfolgt beispielsweise in mit Mischorganen ausgerüsteten Kesseln, Autoklaven, die gegebenenfalls als mehrstufige Kaskade ausgebildet sind, oder auch aus Kombinationen von Kesseln mit nachgeschalteten Strömungsrohren. Auf das in der Polymerisationsapparatur vorgelegte pulverförmige Material wird unter Polymerisationsbedingungen eine Lösung der Monomeren (a) und (b) vorzugsweise in dem jeweils zu verwendenden Wärmeübertragungsmittel auf das Pulverbett aufgesprüht. Das Wärmeübertragungsmittel kann jedoch auch separat von den Monomeren in die Polymerisationszone eingebracht werden. Während der Polymerisation wird für eine gute Durchmischung des Pulverbetts gesorgt. Da das Wärmeübertragungsmittel aus der Polymerisationszone entfernt wird, bleibt der Pulverzustand der Reaktionsmasse während der gesamten Dauer der Polymerisation aufrechterhalten. Sofern nur geringe Mengen eines Popkorn-Polymerisates gewünscht werden, wird die Reaktion beendet, sobald die gewünschte Menge hergestellt worden ist bzw. die Polymerisationsapparatur mit Polymerisat gefüllt ist. Man kann die Polymerisation jedoch auch kontinuierlich über mehrere Tage oder sogar Wochen fortführen, wenn man kontinuierlich bzw. chargenweise jeweils so viel Monomere zuführt wie man an Polymeren aus der Polymerisationszone ausschleust. Man erhält direkt unlösliche, nur wenig quellbare pulverförmige Polymerisate auf Basis von N-Vinylpyrrolidon. Die Zusammensetzung der Monomeren kann kontinuierlich oder auch abrupt geändert werden, ohne dass dadurch die Polymerisation gestoppt wird. So kann man beispielsweise als Komponente (a) N-Vinyl pyrrolidon mit einem Monomer der Komponente (b) polymerisieren und die Zusammensetzung des Zulaufs plötzlich ändern, indem man als Komponente (a) eine Mischung aus nur 0,5 Gew.% N-Vinylpyrrolidon und 99,5 Gew.% Acrylamid in die Polymerisationszone einbringt. Nach Erreichen eines stationären Zustandes im Reaktor erhält man dann Polymerisate, die bezüglich der Zusammensetzung derjenigen des Monomerengemisches entsprechen. Der Teilchendurchmesser der Popcorn-Polymerisate beträgt ca. 0,05 bis 5 mm.

Die erfindungsgemäss erhaltenen Popcorn-Polymerisate werden als Adsorbens, z.B. zur Adsorption von Gerbstoffen aus Getränken und als Formulierungshilfsmittel für Düngemittel und Pflanzenschutzmitteln verwendet. Für die zuletzt genannten Anwendungsbereiche werden die Popcorn-Polymerisate mit den Wirkstoffen gemischt und bewirken bei der bestimmungsgemässen Anwendung eine bessere Verteilung der Düngemittel bzw. Pflanzenschutzmittel.

Beispiele

Beispiel 1 bis 6

In sämtlichen Beispielen wurde als Polymerisationsapparatur ein 1-l-Kolben verwendet, der mit einem Magnetrührer und mit einem Ankerrührer, einem für das Arbeiten unter Stickstoffatmosphäre geeigneten Tropftrichter, einem Rückflusskühler und einer Stickstoffzuleitung versehen war. Der Kolben wurde in ein beheizbares Ölbad eingetaucht. Man leitete etwa 10 l Stickstoff/Stunde durch die Apparatur. Die Polymerisation wurde in der Weise durchgeführt, dass man in der oben beschriebenen Apparatur zur Herstellung eines aktiven Popkorn-Polymerisates zunächst eine Vorlage polymerisierte, die aus 15 g N-Vinylpyrolidon und 0,12 g Divinylethylenharnstoff bestand. Die Vorlage wurde unter ständigem Rühren auf eine Temperatur von 110°C erhitzt. Bei dieser Temperatur setzte die Bildung eines weissen, lockeren Polymerisats ein. Die Polymerisation begann nach ca. 15 Minuten und war nach dem Start innerhalb von etwa 5 Minuten beendet.

Dieses Polymerisat diente als Vorlage für die Polymerisation im Pulverbett, für die dann der Rückflusskühler durch einen Destillationskühler mit Vorlage ersetzt und die Mischung aus den Monomeren (a) und (b) sowie dem Wärmeübertragungsmittel in der Weise zugegeben wurde, dass der Pulverzustand während der Polymerisation aufrechterhalten blieb und das Wärmeübertragungsmittel aus der Polymerisationszone abdestillierte. Es wurde bei 110°C polymerisiert. In der Tabelle 1 sind die Einsatzstoffe für die Polymerisation im Pulverbett und die jeweiligen Ausbeuten angegeben, die nach einer zweimaligen Wäsche des Popkorn-Polymerisats mit Aceton erhalten wurden. Die Teilchengrösse der Popkorn-Polymerisate betrug ca. 0,05 bis 5 mm.

Für einige der oben beschriebenen Polymerisate wurde die Tannin-Adsorption geprüft. Die Prüfung wurde so durchgeführt, dass man zu 100 mg des Polymerisats 100 ml einer 0,01 gew.%igen wässrigen Tannin-Lösung zugab und die Mischung 10 bzw. 40 Minuten lang schüttelte. Nach den angegebenen Zeiten wurde jeweils das Polymerisat abfiltriert, das Filtrat mit Wasser auf ein fünftel der ursprünglichen Konzentration verdünnt und der Restgehalt an Tannin durch vergleichende Messung mit einer nicht behandelten Lösung bei einer Wellenlänge von 275 nm in einem Spektralphotometer gemessen. Die Ergebnisse dieser Prüfungen sind ebenfalls in der Tabelle angegeben.

Tabelle

| Beispiel | Zulauf Monomere | Wärmeübertragungsmittel | Ausbeute [g] | Rest-Tannin [%] 10 min | 40 min |
|---|---|---|---|---|---|
| 1 | 150 g VP[1]; 0,75 g DVEH[2] | 50 ml Wasser | 154 | 47 | 28 |
| 2 | 100 g VP; 0,5 g DVEH | 15 ml n-Propanol | 86 | 50 | 22 |
| 3 | 100 g VP; 0,5 g DVEH | 15 ml Methylcyclohexan | 82 | — | — |
| 4 | 100 g VP; 0,5 g DVEH | 15 ml n-Heptanol | 83 | — | — |
| 5 | 100 g VP; 0,5 g DVEH | 15 ml Essigsäurepropylester | 88 | 52 | 23 |
| 6 | 100 g VP; 0,5 g DVEH | 15 ml t-Methyl-2-pentanon | 72 | — | — |

[1] VP = N-Vinylpyrrolidon-2
[2] DVEH = Divinylethylenharnstoff (N,N'-Divinylimidazolidon-2)

Beispiel 7

Man verwendete die in den Beispielen 1 bis 6 beschriebene Apparatur und stellte darin zunächst das dort ebenfalls beschriebene Popkorn-Polymerisat her, das als Vorlage für die Polymerisation im Pulverbett diente. Hierzu gab man bei einer Temperatur von 110°C eine Lösung von 105 g N-Vinylpyrrolidon, 45 g Vinylpropionat, 3,9 g Divinylethylenharnstoff in 25 ml n-Propanol kontinuierlich innerhalb von 80 Minuten zu und destillierte das als Wärmeübertragungsmittel verwendete n-Propanol kontinuierlich aus der Reaktionszone ab, wobei der Pulverzustand in der Polymerisationsapparatur aufrechterhalten wurde. Das Polymerisat wurde dann mit Methanol und anschliessend mit Wasser gewaschen und bei einer Temperatur von 70°C im Vakuum getrocknet. Man erhielt insgesamt 154 g eines Popkorn-Polymerisats mit einer Teilchengrösse von 0,1 bis 3 mm.

Beispiel 8

2 g des nach Beispiel 1 erhaltenen Popkorn-Polymerisats aus 99,2 Gew.% N-Vinylpyrrolidon und 0,8 Gew.% Divinylethylenharnstoff wurden unter Stickstoff-Atmosphäre in einem 1 l-Kolben vorgelegt, der mit einem Ankerrührer, einem Tropftrichter für das Arbeiten unter Stickstoffatmosphäre, einem Destillationskühler mit Vorlage und einer Stickstoffzuleitung ausgestattet war, und unter Stickstoffatmosphäre auf eine Temperatur von 120°C erwärmt. Dann wurde die Polymerisation im Pulverbett ohne eine erkennbare Induktionsperiode durchgeführt, indem man eine Mischung von 100 g N-Vinylpyrrolidon, 0,8 g Divinylethylenharnstoff und 20 ml n-Propanol innerhalb von 60 Minuten kontinuierlich zu der Vorlage gab. Sie wurde unter Aufrechterhaltung des Pulverzustands, Umwälzung der Reaktionsmasse und Verdampfen des n-Propanols aus der Polymerisationszone bei einer Temperatur von 120°C durchgeführt. Die Ausbeute an Popkorn-Polymerisat betrug 98% der Theorie.

Beispiel 9

Beispiel 8 wird mit der Ausnahme wiederholt, dass man als Zulauf für die Polymerisation im Pulverbett eine Mischung aus 90 g Acrylamid, 10 g N-Vinylpyrrolidon, 1,5 ml 30%igem wässrigem Formaldehyd und 40 ml Wasser verwendet. Unter den Reaktionsbedingungen entsteht aus Formaldehyd und Acrylamid der Vernetzer Methylen-N,N'-bis-acrylamid. Die Ausbeute betrug 95% der Theorie.

Vergleichsbeispiel 1

In einem 1 l-Kolben, der mit Rührer, Rückflusskühler und einer Einrichtung zum Arbeiten unter Stickstoff ausgerüstet war, wurde eine wässrige Lösung von 150 g Acrylamid, 0,3 g Methylen-N,N'-bis-acrylamid und 0,5 g Kaliumperoxodisulfat in 500 ml Wasser vorgelegt und 4 Stunden auf eine Temperatur von 70°C erhitzt. Nach 40 Minuten musste der Rührer abgeschaltet werden, weil sich der Kolbeninhalt verfestigt hatte.

Vergleichsbeispiel 2

In der im Vergleichsbeispiel 1 beschriebenen Apparatur wurde eine Lösung von 150 g Acrylamid, 2 g Divinylethylenharnstoff und 0,5 g Kaliumperoxodisulfat in 500 ml Wasser bei einer Temperatur von 70°C der Polymerisation unterworfen. Nach einer Polymerisationszeit von 40 Minuten konnte der Kolbeninhalt nicht mehr gerührt werden. Man erhielt ein farbloses Gel, das zerkleinert, danach mit Wasser und mehrfach mit Aceton gewaschen und schliesslich bei 70° im Vakuum getrocknet wurde. Die Ausbeute betrug 144 g Polymerisat, das ein Schüttgewicht von 0,73 g/cm$^3$ hatte.

**Patentansprüche**

1. Verfahren zur Herstellung von unlöslichen, nur wenig quellbaren, pulverförmigen Polymerisaten auf Basis von N-Vinylpyrrolidon durch Polymerisieren von
(a) N-Vinylpyrrolidon oder Mischungen aus mindestens 0,5 Gew.% N-Vinylpyrrolidon mit Acrylamid, Methacrylamid, Acrylsäureester, Methacrylsäureester, acyclischen N-Vinylcarbonsäureamiden, einem Vinylester und/oder einer Verbindung der Formel

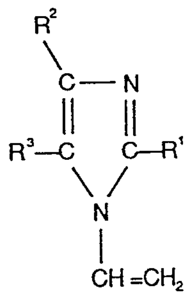

(I).

in der $R^1$, $R^2$, $R^3$ = H, $CH_3$; und $R^1$ ausserdem $C_2H_5$, $C_3H_7$ und $C_4H_9$ ist, und

(b) 0,1 bis 10 Gew.%, bezogen auf die gesamten Monomeren, einer mindestens zwei ethylenisch ungesättigte nicht konjungierte Doppelbindungen aufweisenden Verbindung als Vernetzer unter Ausschluss von Sauerstoff und Polymerisationsinitiatoren, dadurch gekennzeichnet, dass man zum Starten der Polymerisation zunächst ein unlösliches, nur wenig quellbares, pulverförmiges Polymerisat des N-Vinylpyrrolidons durch Erhitzen von Mischungen aus 99,6 bis 98,8 Gew.% N-Vinylpyrrolidon und 0,4 bis 1,2 Gew.% einer mindestens zwei ethylenisch ungesättigte Doppelbindungen aufweisenden Verbindung auf eine Temperatur in dem Bereich von 100 bis 150°C in Abwesenheit von Sauerstoff und Polymerisationsinitiatoren herstellt und die Polymerisation in einem Pulverbett, das ein unlösliches, nur wenig quellbares Polymerisat enthält oder daraus besteht, in Gegenwart eines Wärmeübertragungsmittels, das gegenüber den Reaktionsteilnehmern inert ist, bei Temperaturen von 90 bis 220°C unter Aufrechterhaltung des Pulverzustandes, Umwälzung der Reaktionsmasse und Verdampfen des Wärmeübertragungsmittels aus der Polymerisationszone durchführt.

2. Verfahren nach Anspruch 1, dadurch gekennzeichnet, dass man als Monomer (a) eine Mischung aus 99 bis 30 Gew.% N-Vinylpyrrolidon und 1 bis 70 Gew.% Vinylpropionat einsetzt.

3. Verfahren nach Anspruch 1, dadurch gekennzeichnet, dass man als Monomer (a) eine Mischung aus 99 bis 0,5 Gew.% N-Vinylpyrrolidon und 1 bis 99,5 Gew.% Acrylamid, Methacrylamid, N-Vinylformamid, N-Vinyl-N-methylacetamid und/oder Acrylsäureester einsetzt.

4. Verfahren nach Ansprüchen 1 bis 3, dadurch gekennzeichnet, dass man als Monomer (b) Divinylethylenharnstoff, Ethyliden-bis-3-(N-vinylpyrrolidon), 1-Vinyl-3-ethylidenpyrroliden, Acrylsäureallylester, Methacrylsäureallylester und/oder Divinylpropylenharnstoff einsetzt.

**Revendications**

1. Procédé de préparation de polymères pulvérulents insolubles et ne gonflant que peu, à base de N-vinylpyrrolidone, par polymérisation de

a) N-vinylpyrrolidone ou de mélanges d'au moins 0,5% en poids de N-vinylpyrrolidone avec l'acrylamide, le méthacrylamide, un acrylate, un méthacrylate, un N-vinylcarboxamide acyclique, un ester vinylique et/ou un composé de formule

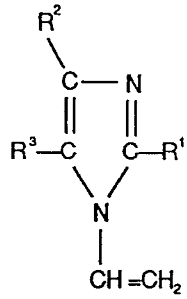

(I).

dans laquelle $R^1$, $R^2$, $R^3$ = H ou $CH_3$; et $R^1$ est en outre $C_2H_5$, $C_3H_7$ ou $C_4H_9$, et

b) de 0,1 à 10% en poids, par rapport au total des monomères, d'un composé présentant au moins deux doubles liaisons insaturées éthyléniques non conjuguées comme agent de réticulation, en l'absence d'oxygène et d'initiateurs de polymérisation, caractérisé en ce qu'on prépare tout d'abord, pour amorcer la polymérisation, un polymère pulvérulent, insoluble et ne gonflant que peu de N-vinylpyrrolidone par chauffage de mélange de 99,6 à 98,8% en poids de N-vinylpyrrolidone et de 0,4 à 1,2% en poids d'un composé contenant au moins deux doubles liaisons insaturées éthyléniques à une température comprise entre 100 et 150°C en l'absence d'oxygène et d'initiateurs de polymérisation et on effectue la polymérisation dans un lit pulvérulent qui contient ou est formé d'un polymère insoluble ne gonflant que peu, en présence d'un milieu de transmission de la chaleur, qui est inerte vis-à-vis des corps participant à la réaction, à des températures de 90 à 220°C, avec maintien de l'état pulvérulent, circulation de la masse réactionnelle et évacuation du milieu de transmission de la chaleur par évaporation hors de la zone réactionnelle.

2. Procédé selon la revendication 1, caractérisé en ce qu'on introduit comme monomère (a) un mélange de 99 à 30% en poids de N-vinylpyrrolidone et de 1 à 70% en poids de propionate de vinyle.

3. Procédé selon la revendication 1, caractérisé en ce qu'on introduit comme monomère (a) un mélange de 99 à 0,5% en poids de N-vinylpyrrolidone et de 1 à 99,5% en poids d'acrylamide, de méthacrylamide, de N-vinylformamide, de N-vinyl-N-méthylacétamide et/ou d'un acrylate.

4. Procédé selon l'une quelconque des revendications 1 à 3, caractérisé en ce qu'on introduit comme monomère (b) de la divinyléthylène-urée, de l'éthylidène-bis-3-(N-vinylpyrrolidone), de la 1-vinyl-3-éthylidènepyrrolidone, de l'acrylate d'allyle, du méthacrylate d'allyle et/ou de la divinylpropylène-urée.

**Claims**

1. A process for the preparation of an insoluble polymer powder which is only slightly swellable and is based on N-vinylpyrrolidone by polymerization of

(a) N-vinylpyrrolidone or a mixture of not less than 0.5% by weight of N-vinylpyrrolidone with acrylamide, methacrylamide, acrylates, methacrylates, acyclic N-vinylcarboxamides, a vinyl ester and/or a compound of the formula

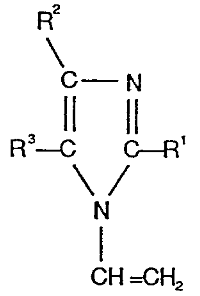

(I).

where $R^1$, $R^2$ and $R^3$ are each H or $CH_3$ and $R^1$ may furthermore be $C_2H_5$, $C_3H_7$ or $C_4H_9$, and

(b) from 0.1 to 10% by weight, based on the total amount of monomers, of, as a crosslinking agent, a compound which possesses two or more ethylenically unsaturated non-conjugated double bonds in the absence of oxygen and a polymerization initiator wherein, in order to initiate the polymerization, an insoluble N-vinylpyrrolidone polymer powder which is only slightly swellable is first prepared by heating a mixture of from 99.6 to 98.8% by weight of N-vinylpyrrolidone and from 0.4 to 1.2% by weight of a compound possessing two or more ethylenically unsaturated double bonds to 100–150 °C in the absence of oxygen and polymerization initiators and the polymerization is carried out in a powder bed which contains or consists of an insoluble polymer which is only slightly swellable, in the presence of a heat-transfer medium which is inert to the reactants, at from 90 to 220 °C, the powder state being maintained, the reaction mass being circulated and the heat-transfer medium being evaporated from the polymerization zone.

2. A process as claimed in claim 1, wherein a mixture of from 99 to 30% by weight of N-vinylpyrrolidone and from 1 to 70% by weight of vinyl propionate is used as monomer (a).

3. A process as claimed in claim 1, wherein a mixture of from 99 to 0.5% by weight of N-vinylpyrrolidone and from 1 to 99.5% by weight of acrylamide, methacrylamide, N-vinylformamide, N-vinyl-N-methylacetamide and/or acrylates is used as monomer (a).

4. A process as claimed in claims 1 to 3, wherein divinylethyleneurea, ethylidene bis-3-(N-vinylpyrrolidone), 1-vinyl-3-ethylidenepyrrolidone, allyl acrylate, allyl methacrylate and/or divinylpropyleneurea are used as monomers (b).